# EUROPEAN PATENT SPECIFICATION

(11) **EP 1 984 643 B1**
(45) Date of publication and mention of the grant of the patent: **22.07.2009**
(21) Application number: 06728432.3
(22) Date of filing: 17.02.2006
(51) Int. Cl.: F16D 65/097, F16D 55/228

(54) **SPRING FOR HOLDING PADS IN A DISC BRAKE CALIPER**
FEDERN ZUM HALTEN VON BACKEN IN EINEM SCHEIBENBREMSSATTEL
RESSORT POUR RETENIR DES COUSSINS DANS UN ETRIER DE FREIN A DISQUE

(43) Date of publication of application: 29.10.2008
(73) Proprietor: Freni Brembo S.p.A., 24035 Curno (Bergamo) (IT)
(72) Inventor: RATTI, Marco, I-23900 Lecco (IT)
(74) Representative: Leihkauf, Steffen Falk
(86) International application number: PCT/IT2006/000082
(87) International publication number: WO 2007/094017

(56) References cited:
- EP-A1- 0 412 541
- EP-A2- 0 794 349
- EP-A2- 1 158 196
- US-A- 3 243 017
- US-A1- 2005 194 222

## Description

The object of the present invention is a spring for elastically holding and positioning the pads in a disc brake caliper, such as for instance known from EP-A-1 158 196, as well as a disc brake provided with such a spring, such as for instance known from EP-A-0 412 541.

Cross-shaped expansion springs for disc brakes with stationary caliper are known, which are provided with a longitudinal beam, the ends thereof resting on two support pins supporting the pads and a cross beam, the ends thereof resting on an upper edge of the tabs such that the tabs are elastically held in a "lowered" position. Due to an inclined configuration of the lower surface of the cross beam, the expansion springs can further bias the pads away from each other to ensure that the pads are separated from the brake disc after each braking action.

Usually, the ends of the longitudinal beam of the known expansion springs engage both support pins from below and press, through their cross beam, from above and in a springy manner against the support shims of the pads.

Expansion springs have been further proposed, which engage only one support pin by means of only one end of the longitudinal beam, whereas the other end directly rests on the caliper body. In this known embodiment, only one support pin is used to hold the pads, thus resulting in a determined torque acting on the pads which thrusts the latter against one of the counter-walls of the caliper. Though being satisfactory in reducing the vibrations and obtaining an even wear of the pad friction coatings, the known devices are difficult to assemble, since the spring has to be simultaneously positioned and also deformed by hand to be brought to the configuration of elastic abutment against the support pins and the pads. The assembly of the prior art expansion springs can be facilitated only by reducing the rigidity (i.e. the elastic strength) of the spring, such that easier positioning and easier hand-deformation can be carried out. However, when the spring rigidity is reduced, its characteristic of reducing the vibrations of the pads and accordingly the noise of the brake is also dramatically decreased.

Accordingly, the object of the present invention is to provide a pad spring of the type described above and a disc brake having such characteristics as to conciliate the requirement of using highly rigid springs and the requirement of easily and safely assembling the latter.

This object is achieved by means of a pad spring according to claim 1 and by means of a disc brake according to claim 10.

In order to better understand the invention and appreciate the advantages thereof, some exemplary and non-limiting embodiments of the same are described herein below, with reference to the annexed drawings, in which:

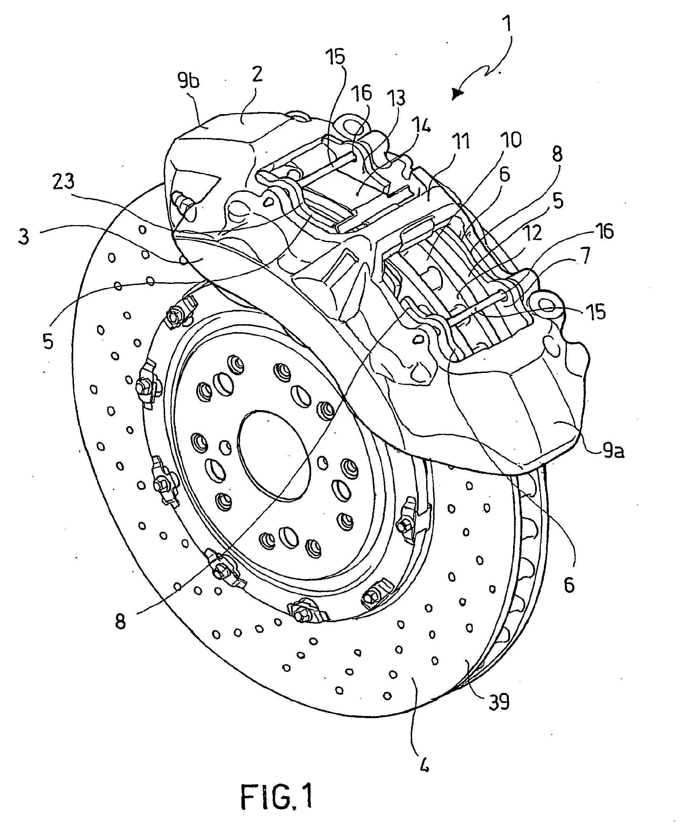

Fig. 1 is a perspective view of a disc brake according to the invention;

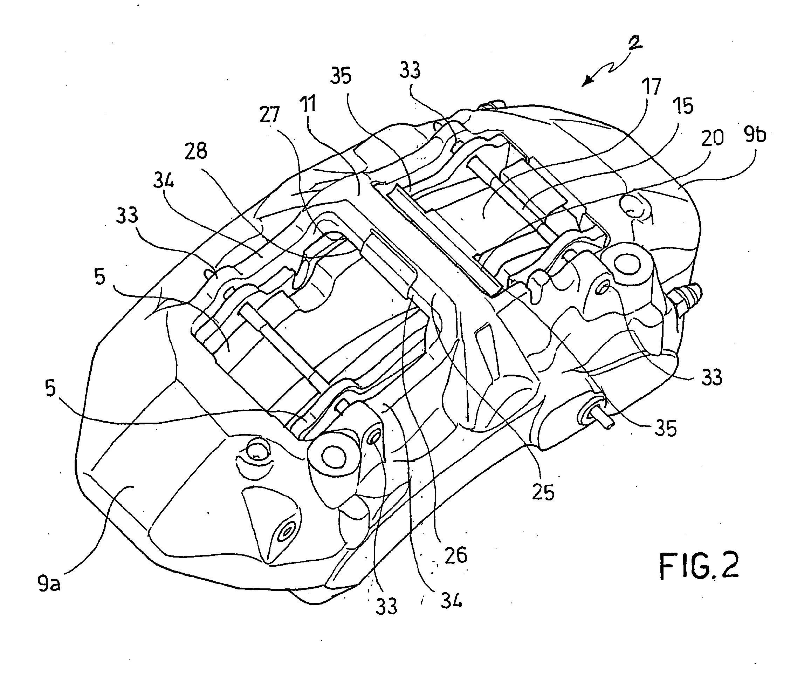

Fig. 2 is a perspective view of a detail of the disc brake as shown in Fig. 1;

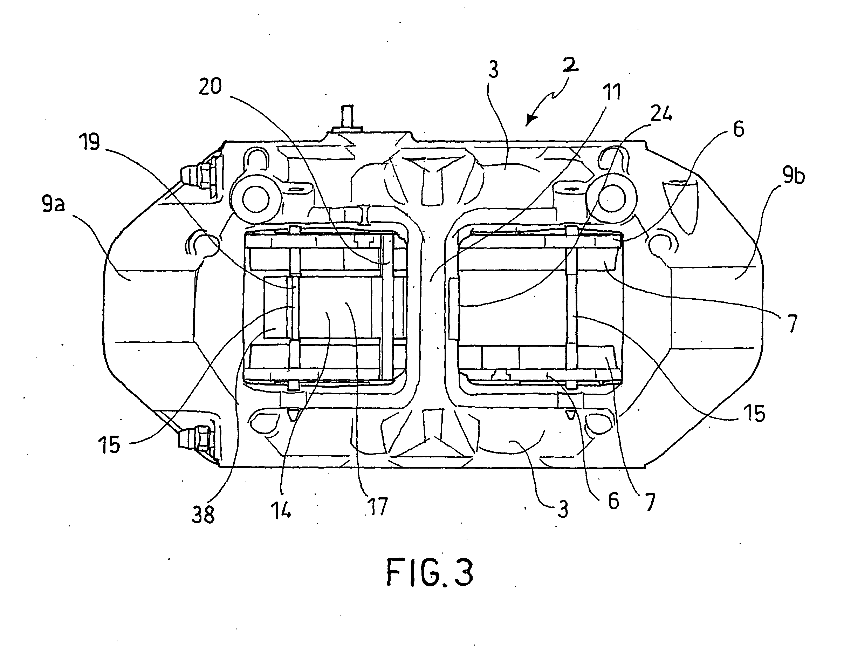

Fig. 3 is a top view of the detail from Fig. 2;

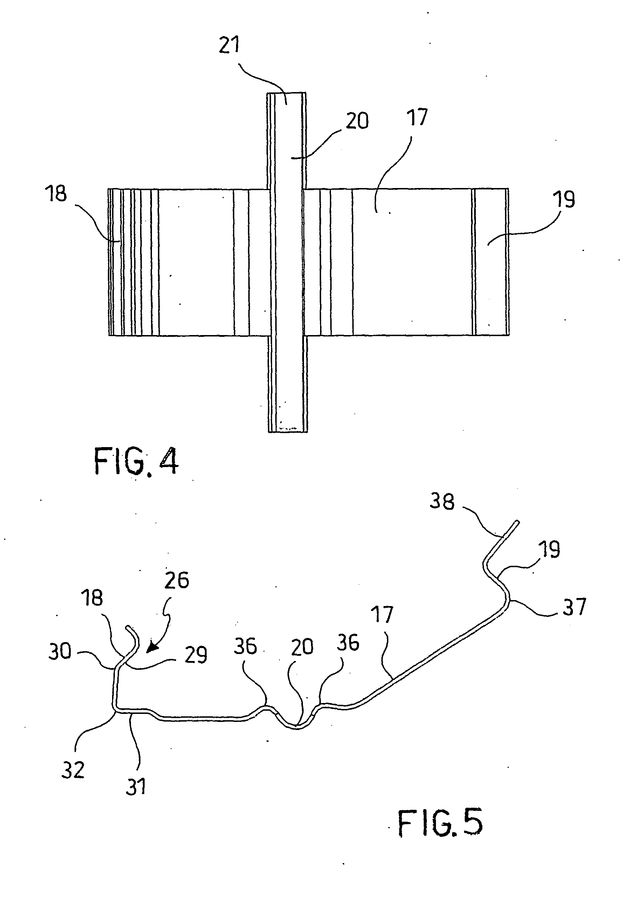

Fig. 4 is a top view of a pad spring according to an embodiment of the invention;

Fig. 5 is a side view of the pad spring as shown in Fig. 4.

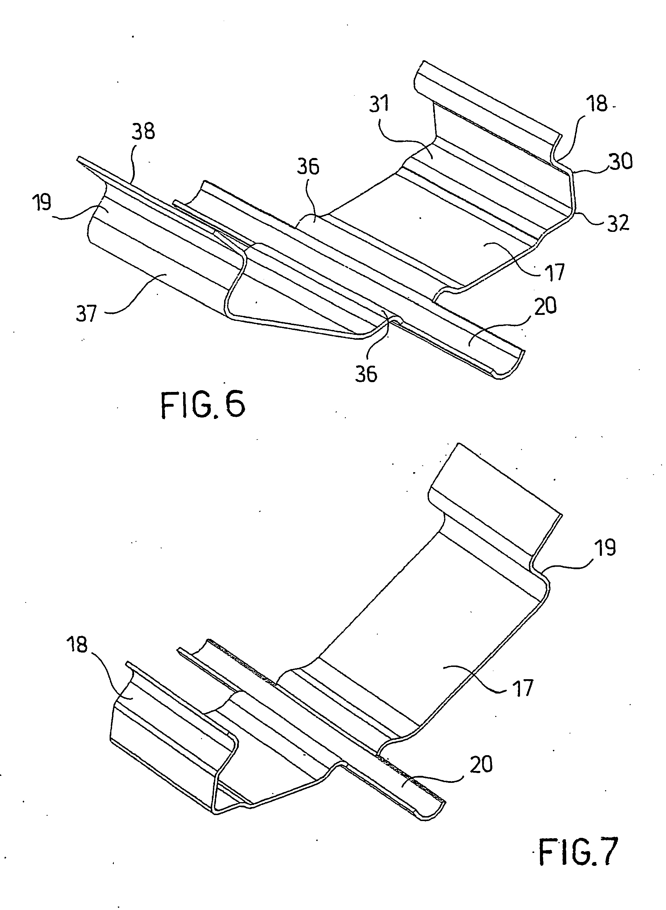

Fig. 6 and 7 are two perspective views of the pad spring as shown in Fig. 4 in a rest configuration.

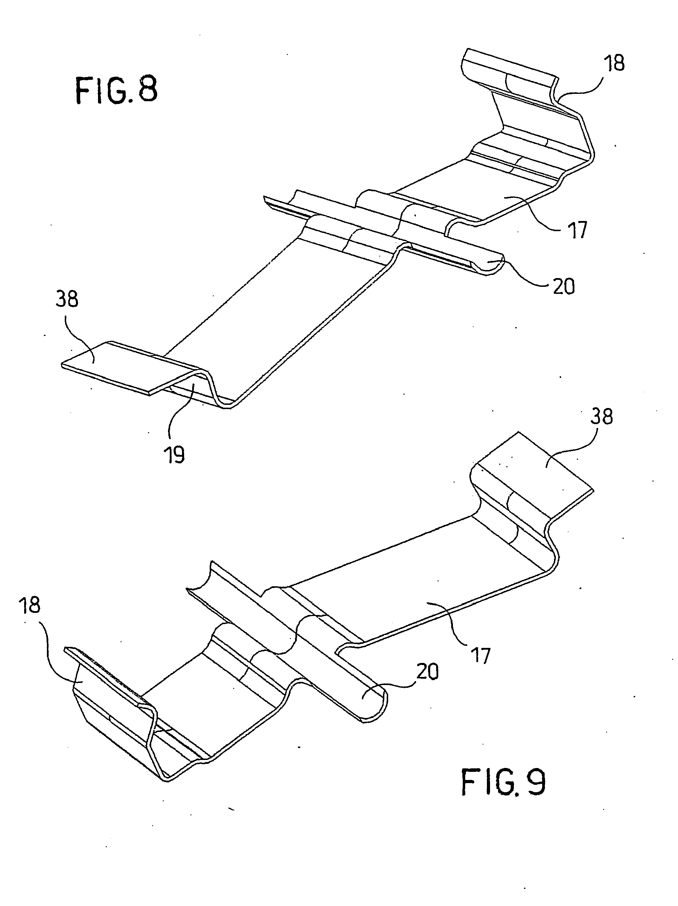

Fig. 8 and 9 are two perspective views of the pad spring as shown in Fig. 4 in a deformed working configuration.

With reference to the figures, a disc brake, particularly to be used in motor vehicles, is generally designated with numeral 1. In this particular case, it is a disc brake with stationary caliper.

The disc brake 1 comprises a caliper 2 and a disc brake 39. The caliper 2 can be secured, by means of clamping screws, to a vehicle suspension, whereas the brake disc 39, provided with a circular braking band 4, can be connected to the wheel hub of the vehicle.

The caliper 2 comprises two side walls 3 arranged on both sides of the disc brake 39 and connected to each other by means of connecting elements extending astride the braking band 4. Advantageously, the caliper 2 comprises two end bridges 9a, 9b defining a middle aperture 10, as well as a tie-rod 11, arranged in said middle aperture 10 structurally connecting the two side walls 3 such as to restrain the deformation of the caliper 2 while braking. Preferably, the tie-rod 11 is arranged approximatively in the center of the middle aperture 10 such that the latter is divided in two half-apertures 12, 13, having substantially the same circumferential extension (relative to the brake disc). At least two pads 5, consisting of a plate 6, for example made of steel, respectively, carrying a friction material coating 7, are arranged each on a side of the brake disc 39 at the braking band 4 and accommodated in suitable seats 8 of the caliper 2 and supported by at least one, preferably two, support pins 15. The support pins 15 have such size and mechanical strength that the pads can be hung to these support pins, such as by means of a hole or slot 16 drilled in the plate 6 at an upper edge 23 thereof, in order to prevent the pads 5 from radially shifting (relative to the rotation axis of the disc brake). However, the support pins 15 for the pads do not contribute to the overall rigidity of the caliper 2.

The pads 5, that can be moved in the perpendicular direction to the brake disc 39, can be affected by thrust means, such as one or more hydraulic cylinder-piston assemblies (not shown in the figures), which are arranged within the caliper 2, such that a sector of the braking band 4, the shape and surface thereof mating the friction coatings 7, is tightened by means of the friction coating 7.

To prevent that the pads 5 knock within the seats 8 when the vehicle is running with the brake deactivated, at least a suitable pad spring 14 is provided to apply an elastic preload on the pads 5 such that the latter are stopped within the seats 8 even when the brake is deactivated, thereby the vibrations and noise of the brake due to the movements of the pads are also reduced.

The spring 14 comprises a longitudinal beam 17 with two ends 18, 19 suitable to engage counter-portions, either integral with or connected to the caliper, and a cross beam 20 connected to the cross beam 17 and oriented in a transversal direction, preferably substantially perpendicular to the longitudinal direction of the longitudinal beam 17. The cross beam 20 has two ends 21, 22 suitable to engage the upper edge 23 of the plates 6 of the pads 5 such that the latter are elastically held in position.

Advantageously, the spring 14 forms a seat 24 for snap attachment of the longitudinal beam 17 to one of the counter portions integral with the caliper 2.

In accordance with an embodiment, the snap attachment seat 24 is formed at the first end 18 of the longitudinal beam 17 and has such as a shape as to allow a snap engagement, preferably with the tie-rod 11 structurally connecting the two side walls 3 of the caliper. The second end 19 of the longitudinal beam 17 is arranged opposite the snap attachment seat 24 and forms an abutment seat against one of the two support pins 15 to which the pad plates 6 are attached.

Advantageously, the spring 14 is formed as one piece, preferably in a plate-like or belt-like material shaped such as to have only curvatures about axes substantially parallel and substantially perpendicular to the plane of the brake disc when the spring is assembled in the caliper.

In accordance with an embodiment, the tie-rod 11 and the snap attachment seat 24 of the spring 14 are arranged and shaped such that, upon an elastic deformation of the spring 14 as required to bring the second end 22 thereof into pressing abutment against the support pin 15, the spring 14 is left attached to the tie-rod 11. Advantageously, the tie-rod 11 has an at least partially polygonal shape in cross-section. Particularly, the tie-rod 11 forms a stop surface 25 substantially planar and facing outward from the caliper, or in other words, facing away from the pads, with an adjacent edge 26 defining the side of the stop surface 25 closer to the pads and a counter-surface 27 facing an approximatively opposite direction relative to the stop surface 25 and defined by an adjacent edge 28. The snap attachment seat 24 of the spring also has a sectional at least partially polygonal shape, and particularly a stop tract 29 substantially planar and complementary with the stop surface 25, in which the stop tract 29 is defined by a substantially straight fold 30 forming an inner angle suitable to accommodate the edge 26 of the tie-rod 11. Besides the stop tract 29, the snap fit seat 24 also forms a counter tract 31 which is substantially planar and complementary with the counter surface 27, in which the counter tract 31 is defined by a substantially straight fold 32 forming an inner angle suitable to house the edge 28 of the tie-rod 11.

The distance between the stop tract 29 and the counter tract 31 of the snap attachment seat 24 is slightly shorter than the corresponding distance between the stop surface 25 and the counter surface 27 of the tie-rod 11, such that, due to the elastic deformability of the seat 24, this is connected to the tie-rod 11 by means of interference. The further mutual engagement of the straight folds 30, 32 of the seat 24 with the corresponding edges 26, 28 of the tie-rod greatly increase the effectiveness of the snap engagement, without having to resort to high elastic preload of the spring.

Alternatively, or in addition, the tie-rod can form appropriate grooves or projections suitable to improve the engagement with the seat 24 of the spring 14.

The two support pins 15 are preferably arranged each at one of the half-apertures 12 and 13, preferably proximate to one of the end bridges 9a, 9b of the caliper, respectively. Since the support pins 15 pass through the holes 16 of the pads, they require to be removably fixed to the caliper. To removably fix the two support pins 15, suitable seats 33 are provided, for example threaded holes formed in outer edges 34 opposite to each other of the two side walls 3 of the caliper.

In the assembled configuration of the spring 14, the quick-snap attachment seat 24 engages by means of pressing contact the side of the tie-rod 11 facing the pads 5 and the second end 19 of the longitudinal beam 17 engages by means of pressing contact the side of one of the two support pins 15 facing the pads 5, whereas the ends 21, 22 of the cross beam 20 engage those upper edges 23 of the plates 6 of the pads 5 substantially facing outward from the caliper, or in other words, facing the tie-rod 11. In this manner, the pads 5 are elastically pushed away from the tie-rod 11.

In accordance with an embodiment, the plates 6 of the pads 5 define seats 35 suitable to house the ends 21, 22 of the cross beam 20 such that a movement of the spring 14 relative to the pads 5 is prevented or hindered in the longitudinal direction of the longitudinal beam 17, and vice versa. These seats 35 can either comprise cavities formed in the upper edge 23 of the plate 6 and suitable to provide a shape coupling or tracts of the upper edge 23 provided with a surface roughness suitable to provide a frictional coupling to the ends 21, 22 of the cross beam 20 of the spring.

Advantageously, the cross beam 20 is connected to the longitudinal beam 17 without any sectional variation of the cross beam 20 in the area where it overlaps to the longitudinal beam and, preferably, the cross beam has a uniform sectional shape all along the entire length thereof.

In accordance with an embodiment, the cross beam 20 has a C-shaped section, in which the convex side of the C-shaped profile faces the pads and abuts against the seats 35. Advantageously, the longitudinal beam 17 forms two further C-shaped portions 36, the convex side thereof facing away from the pads, and which extend to the area in which the longitudinal beam and the cross beam overlap along both sides of the latter, such that each C-shaped portion 36, together with the cross beam 20, have a substantially S-shaped section. This particular shape of the spring 14 gives high rigidity to the cross beam 20.

In accordance with an embodiment, the support pin 15 with which the second end 19 of the longitudinal beam is engaged has a section of substantially circular shape and, in order to obtain an effective engagement of the spring 14 with this support pin 15, the second end 19 of the longitudinal beam preferably forms a seat 37, either shaped like an arc of a circle or C-shaped, with the concave side facing the pin, or in other words, facing away from the pads. Advantageously, to said seat 37 there is connected an actuating portion 38, preferably substantially planar, which is the free end of the second end 19 of the longitudinal beam and allows the spring 14 to be easily bent by hand upon assembly, such as described below. As said actuating portion 38 is formed at the opposite end of the spring relative to the snap attachment seat 24, the operator mounting the brake can use a particularly long lever arm to deform the spring upon assembly. Further advantageously, the cross beam 20 is arranged between said snap attachment seat 24 and the second end 19 of the longitudinal beam 17 and the distance between the cross beam and the snap attachment seat is lower than the distance between the cross beam and said second end 19. This allows the second end 19 to be easily bent when the spring is being assembled, as well as a relatively rigid abutment or fitting of the spring between the tie-rod 11 of the caliper and the pads 5 when the spring is assembled.

According to an embodiment of the invention, the tie-rod 11 is formed as one piece with the two side walls 3 of the caliper 2, such as the whole caliper 2 including the tie-rod 11 can be made of aluminium or aluminium alloy, and thus a very light caliper is obtained, the rigidity being equal.

Alternatively, the tie-rod 11, for example made of steel, is connected by means of threaded means with at least one of the two side walls of the caliper.

The assembly of the pads is advantageously carried out as follows:

The pads 5 are positioned within their seats 8 and the first support pin is inserted within the slots 16 of the plates 6 of the pads and fixed in an unlosable manner within the respective seats 33 of the caliper. Thereby, the pads are hung to one of the two support pins and cannot fall therefrom. By means of the snap attachment seat 24, the spring longitudinal beam can be now fitted to the tie-rod and rested on the upper edge of the pads by means of the cross beam. Without having to hold manually the thus defined spring position, the actuating portion 38 is pushed towards the pads until the C-shaped seat 37 of the second end of the longitudinal beam is positioned at the second support pin. With the free hand, this second support pin can be now easily inserted within the suitable slot 16 of the plate 6 of the pad and fixed within the respective seats 33 formed within the caliper 2. By releasing the actuating portion 38, the C-shaped seat of the spring 14 engages the support pin 15 from below, thereby providing the desired elastic preload between the caliper and the pads.

While braking, the thus supported and elastically biased pad, is free from vibrations and the friction coating 7 is subjected to very uniform wear.

Furthermore, the spring 14 according to the present invention, by being suitable to be attached to the tie-rod 11, can have half the size of the prior art springs. In fact, due to its particular shape, the spring can be mounted "unilaterally", such that the spring only extends at one half-aperture, thereby leading to a reduction in the material required for the spring and an increase in the actual cooling surface of the caliper, the rigidity of the spring being equal.

By suitably selecting the distance of the cross beam from the two ends of the longitudinal beam of the spring (which engage the respective seats 35 of the pads), the circumferential thrust direction of the spring 14 against the pads can further be adjusted.

Obviously, to the pad spring and brake disc according to the present invention, those skilled in the art, aiming at satisfying contingent and specific requirements, may carry out a number of modifications and variations, all being however contemplated within the scope of protection of the invention, such as defined in the annexed claims.

## Claims

1. A spring (14) for pads (5) to be associated with a caliper (2) for disc brake (1), said spring (14) comprising:
- a longitudinal beam (17) having two ends (18, 19) suitable to engage counter portions (15, 11) connected with said caliper (2);
- a cross beam (20) connected to the longitudinal beam (17) and having two ends (21, 22) suitable to engage the pads (5) for elastically holding them,
**characterized in that** it comprises a portion defining a seat (24) for the snap attachment of the longitudinal beam (17) to one of the counter portions (11).

2. The spring (14) according to claim 1, wherein said snap attachment seat (24) is formed at one (18) of the ends (18, 19) of the longitudinal beam (17) and suitable to snap engage a tie-rod (11) structurally connecting two side walls (3) of the caliper (2).

3. The spring (14) according to claim 2, wherein the end (19) of the longitudinal beam (17) opposite the snap attachment seat (24) forms an abutment seat (37) for the spring (14) against a support pin (15) which supports the pads (5).

4. The spring (14) according to any preceding claim, which is formed as one piece in a plate-like metal material.

5. The spring (14) according to claim 4, wherein the plate-like metal material is such shaped as to have only curvatures about axes substantially parallel to each other and substantially perpendicular to the plane of the brake disc (39) when the spring (14) is assembled within the caliper (2).

6. The spring (14) according to any preceding claim, wherein the cross beam (20) is connected to the longitudinal beam (17) without any variation in the section of the cross beam (20) in the area in which it overlaps to the longitudinal beam (17).

7. The spring (14) according to any preceding claim, wherein the cross beam (20) has a C-shaped section and the longitudinal beam (17) forms two further C-shaped portions (36) extending along both sides of the cross beam (20), such that each C-shaped portion (36) of the longitudinal beam forms, together with the cross beam (20), a substantially S-shaped portion.

8. The spring (14) according to any preceding claim, wherein the longitudinal beam (17) of the spring forms an actuating portion (38) arranged such as to form the free end of the second end (19) of the longitudinal beam (17).

9. The spring (14) according to any preceding claim, wherein the cross beam (20) is arranged between said snap attachment seat (24) and the second end (19) of the longitudinal beam (17) and the distance between the cross beam (20) and the snap attachment seat (24) is shorter than the distance between the cross beam (20) and said second end (19).

10. A disc brake (1) comprising:
- a caliper (2) with two side walls (3) arranged on both sides of a disc plane (39) and forming seats for pads (8), wherein the two side walls (3) are connected to each other by means of end bridges (9a, 9b) defining a middle aperture (10);
- a tie-rod (11) arranged within said middle aperture (10) structurally connecting the two side walls (3) such as to restrain the deformation of the caliper (2) while braking;
- at least one support pin (15) suitable to support pads (5);
- a pair of pads (5) arranged within said seats for pads (8) and supported by said support pin (15);
- a spring (14) for holding the pads (5),
wherein said spring (14) comprises:
- a longitudinal beam (17) having a first end (18) forming a seat (24) for the snap attachment of the longitudinal beam (17) to said tie-rod (11) and a second end (19) suitable to engage said support pin (15).
- a cross beam (20) connected to the longitudinal beam (17) and having two opposite ends (21, 22) suitable to engage the pads (5) for elastically holding the latter.

11. The disc brake (1) according to claim 10, wherein said tie-rod (11) and said snap attachment seat (24) of the spring (14) are arranged and shaped such that, upon an elastic deformation of the spring (14) required to bring the second end (19) thereof into pressing abutment against the support pin (15) the spring (14) remains attached to the tie-rod (11).

12. The disc brake (1) according to claim 10 or 11, wherein said spring (14) is formed as one piece in a plate-like metal material.

13. The disc brake (1) according to claim 12, wherein the plate-like metal material is such shaped as to have only curvatures about axes substantially parallel to each other and substantially perpendicular to the plane of the brake disc when the spring (14) is assembled within the caliper (2).

14. The disc brake (1) according to claim 10 or one of those depending thereon, wherein the tie-rod (11) is formed as one piece integrally with the two side walls (3) of the caliper (2).

15. The disc brake (1) according to claim 14, wherein the tie-rod (11) and the two side walls (3) are obtained from aluminium or aluminium alloy.

16. The disc brake (1) according to claim 10 or one of those depending thereon, wherein said tie-rod (11) is connected by means of threaded means with at least one of the two side walls (3) of the caliper (2).

17. The disc brake (1) according to claim 16, wherein said tie-rod (11) is made of steel.

18. The disc brake (1) according to claim 10 or one of those depending thereon, wherein:
- the snap attachment seat (24) engages the side of the tie-rod (11) facing the pads (5) by means of pressing contact;
- the second end (19) of the longitudinal beam (17) engages by means of pressing contact the side of the support pin (15) facing the pads (5);
- the ends (21, 22) of the cross beam (20) engage edges (23) of the pads (5) substantially facing the tie-rod (11), such that the pads (5) are elastically pushed away from the tie-rod (11).

19. The disc brake (1) according to claim 10 or one of those depending thereon, wherein the pads (5) define seats (35) suitable to house said cross beam (20) such that a movement of the spring (14) relative to the pads (5) is prevented or hindered in the longitudinal direction of the longitudinal beam (17).

20. The disc brake (1) according to claim 10 or one of those depending thereon, wherein the tie-rod (11) has an at least partially polygonal shaped section and the snap attachment seat (24) of the spring (14) has an at least partially polygonal shaped section approximatively complementary to the partially polygonal shape of the tie-rod (11) and having a slightly smaller size, such that an interference connection is provided with the tie-rod (11).

21. The disc brake (1) according to claim 10 or one of those depending thereon, comprising two support pins (15) each being arranged in the proximity of one of the end bridges (9a, 9b) of the caliper, respectively, and wherein the pads are fastened by both support pins (15).

22. The disc brake (1) according to claim 10 or one of those depending thereon, wherein the cross beam (20) is connected to the longitudinal beam (17) without any variation in the section of the cross beam (20) in the area in which it overlaps to the longitudinal beam (17).

23. The disc brake (1) according to claim 10 or one of those depending thereon, wherein the cross beam (20) has a C-shaped section and the longitudinal beam (17) forms two further C-shaped portions (36) extending along both sides of the cross beam (20), such that each C-shaped portion (36) of the longitudinal beam forms, together with the cross beam (20), a substantially S-shaped portion.

24. The disc brake (1) according to claim 10 or one of those depending thereon, wherein the longitudinal beam (17) of the spring forms an actuating portion (38) arranged such as to form the free end of the second end (19) of the longitudinal beam (17).

25. The disc brake (1) according to claim 10, wherein the cross beam (20) is arranged between said snap attachment seat (24) and the second end (19) of the longitudinal beam (17) and the distance between the cross beam (20) and the snap attachment seat (24) is shorter than the distance between the cross beam (20) and said second end (19).

## Patentansprüche

1. Feder (14) für Bremsklötze (5) in einem Bremssattel (2) für eine Scheibenbremse (1), wobei die Feder (14)
- einen Längsträger (17), der zwei zum Eingriff mit Gegenabschnitten (15, 11), die mit dem Bremssattel (2) verbunden sind, geeignete Enden (18, 19) aufweist,
- einen Querträger (20), der mit dem Längsträger (17) verbunden ist und zwei zum Eingriff mit den Bremsklötzen (5) für ein elastisches Halten derselben geeignete Enden (21, 22),
umfasst,
**dadurch gekennzeichnet, dass** sie einen Abschnitt umfasst, der einen Sitz (24) für die Schnappbefestigung des Längsträgers (17) an einem der Gegenabschnitte (11) bildet.

2. Feder (14) gemäß Anspruch 1, wobei der Schnappbefestigungssitz (24) an einem (18) der Enden (18, 19) des Längsträgers (17) ausgebildet ist und zum einschnappenden Eingriff mit einer Zugstange (11), die zwei Seitenwände (3) des Bremssattels (2) baulich verbindet, geeignet ist.

3. Feder (14) gemäß Anspruch 2, wobei das Ende (19) des Längsträgers (17), das entgegengesetzt zu dem Schnappbefestigungssitz (24) angeordnet ist, einen Anlagesitz (37) für die Feder (14) gegen einen Stützbolzen (15) bildet, der die Bremsklötze (5) abstützt.

4. Feder (14) gemäß einem der vorangehenden Ansprüche, die einstückig aus einem plattenförmigen Metallwerkstoff gebildet ist.

5. Feder (14) gemäß Anspruch 4, wobei der plattenförmige Metallwerkstoff derart geformt ist, dass er nur Krümmungen um Achsen aufweist, die im Wesentlichen parallel zueinander und im Wesentlichen rechtwinklig zu der Ebene der Bremsscheibe (39) angeordnet sind, wenn die Feder (14) in dem Bremssattel (2) montiert ist.

6. Feder (14) gemäß einem der vorangehenden Ansprüche, wobei der Querträger (20) mit dem Längsträger (17) ohne irgend eine Veränderung im Querschnitt des Querträgers (20) in dem Bereich, in dem er den Längsträger (17) überlappt, verbunden ist.

7. Feder (14) gemäß einem der vorangehenden Ansprüche, wobei der Querträger (20) einen C-förmigen Querschnitt aufweist und der Längsträger (17) zwei weitere C-förmige Abschnitte (36) bildet, die sich entlang beider Seiten des Querträgers (20) derart erstrecken, dass jeder C-förmige Abschnitt (36) des Längsträgers zusammen mit dem Querträger (20) einen im Wesentlichen S-förmigen Abschnitt bildet.

8. Feder (14) gemäß einem der vorangehenden Ansprüche, wobei der Längsträger (17) der Feder einen Betätigungsabschnitt (38) bildet, der derart angeordnet ist, dass er das freie Ende des zweiten Endes (19) des Längsträgers (17) bildet.

9. Feder (14) gemäß einem der vorangehenden Ansprüche, wobei der Querträger (20) zwischen dem Schnappbefestigungssitz (24) und dem zweiten Ende (19) des Längsträgers (17) angeordnet ist und der Abstand zwischen dem Querträger (20) und dem Schnappbefestigungssitz (24) kürzer ist als der Abstand zwischen dem Querträger (20) und dem zweiten Ende (19).

10. Eine Scheibenbremse (1) umfassend
- einen Bremssattel (2) mit zwei Seitenwänden (3), die an beiden Seiten einer Scheibenebene (39) angeordnet sind und Sitze für Bremsklötze (8) bilden, wobei die zwei Seitenwände (3) mittels Endbrücken (9a, 9b), die eine mittlere Öffnung (10) bilden, miteinander verbunden sind,
- eine Zugstange (11), die innerhalb der mittleren Öffnung (10) angeordnet ist und die zwei Seitenwände (3) derart baulich verbindet, dass die Verformung des Bremssattels (2) während des Bremsens verhindert wird,
- wenigstens einen Stützbolzen (15), der zum Abstützen der Bremsklötze (5) geeignet ist,
- zwei ein Paar bildende Bremsklötze (5), die in den Sitzen für die Bremsklötze (8) angeordnet sind und durch den Stützbolzen (15) abgestützt werden,
- eine Feder (14) zum Halten der Bremsklötze (5),
wobei die Feder (14)
- einen Längsträger (17), der ein erstes Ende (18), das einen Sitz (24) für die Schnappbefestigung des Längsträgers (17) an der Zugstange (11) bildet, und ein zweites Ende (19) aufweist, das für den Eingriff mit dem Stützbolzen (15) geeignet ist,
- einen Querträger (20), der mit dem Längsträger (17) verbunden ist und zwei entgegen gesetzte Enden (21, 22) aufweist, die für den Eingriff mit den Bremsklötzen (5) für das elastische Halten derselben geeignet ist,
umfasst.

11. Scheibenbremse (1) gemäß Anspruch 10, wobei die Zugstange (11) und der Schnappbefestigungssitz (24) der Feder (14) derart angeordnet und ausgebildet sind, dass die Feder (14) nach ihrer elastischen Verformung, die notwendig ist, um das zweite Ende (19) in eine Druckanlage gegen den Stützbolzen (15) zu bringen, mit der Zugstange (11) verbunden bleibt.

12. Scheibenbremse (1) gemäß Anspruch 10 oder 11, wobei die Feder (14) einstückig aus einem plattenförmigen Metallwerkstoff gebildet ist.

13. Scheibenbremse (1) gemäß Anspruch 12, wobei der plattenförmige Metallwerkstoff derart geformt ist, dass er dann, wenn die Feder (14) in dem Bremssattel (2) montiert ist, nur Krümmungen um Achsen aufweist, die im Wesentlichen parallel zueinander und im Wesentlichen rechtwinklig zu der Ebene der Bremsscheibe verlaufen.

14. Scheibenbremse (1) gemäß Anspruch 10 oder einem seiner Unteransprüche, wobei die Zugstange (11) einstückig mit den zwei Seitenwänden (3) des Bremssattels (2) ausgebildet ist.

15. Scheibenbremse (1) gemäß Anspruch 14, wobei die Zugstange (11) und die zwei Seitenwände (3) aus Aluminium oder einer Aluminiumlegierung hergestellt sind.

16. Scheibenbremse (1) gemäß Anspruch 10 oder einem seiner Unteransprüche, wobei die Zugstange (11) mittels Gewindemittel mit wenigstens einer der zwei Seitenwände (3) des Bremssattels (2) verbunden ist.

17. Scheibenbremse (1) gemäß Anspruch 16, wobei die Zugstange (11) aus Stahl hergestellt ist.

18. Scheibenbremse (1) gemäß Anspruch 10 oder einem seiner Unteransprüche, wobei
- der Schnappbefestigungssitz (24) mit der Seite der Zugstange (11), die den Bremsklötzen (5) zugewandt ist, in Druckkontakt Eingriff ist,
- das zweite Ende (19) des Längsträgers (17) durch den Druckkontakt mit der Seite des Stützbolzens (15), die den Bremsklötzen (5) zugewandt ist, in Eingriff ist,
- die Enden (21, 22) des Querträgers (20) mit Kanten (23) der Bremsklötze (5) in Eingriff sind, die im Wesentlichen der Zugstange (11) derart zugewandt sind, dass die Bremsklötze (5) von der Zugstange (11) elastisch weggedrückt werden.

19. Scheibenbremse (1) gemäß Anspruch 10 oder einem seiner Unteransprüche, wobei die Bremsklötze (5) Sitze (35) bilden, die zur derartigen Aufnahme des Querträgers (20) geeignet sind, dass eine Bewegung der Feder (14) relativ zu den Bremsklötzen (50) in Längsrichtung des Längsträgers (17) verhindert oder erschwert ist.

20. Scheibenbremse (1) gemäß Anspruch 10 oder einem seiner Unteransprüche, wobei die Zugstange (11) einen wenigstens teilweise polygonalförmigen Querschnitt aufweist und der Schnappbefestigungssitz (24) der Feder (14) einen wenigstens teilweise polygonalförmigen Querschnitt aufweist, der zu der teilweisen Polygonalform der Zugstange (11) annähernd komplementär ausgebildet ist und eine derartig geringfügig kleinere Größe aufweist, dass eine Pressverbindung mit der Zugstange (11) bereitgestellt ist.

21. Scheibenbremse (1) gemäß Anspruch 10 oder einem seiner Unteransprüche umfassend zwei Stützbolzen (15), die jeweils in der Nähe einer der Endbrücken (9a, 9b) des Bremssattels angeordnet sind und wobei die Bremsklötze durch beide Stützbolzen (15) befestigt sind.

22. Scheibenbremse (1) gemäß Anspruch 10 oder einem seiner Unteransprüche, wobei der Querträger (20) mit dem Längsträger (17) ohne irgend eine Veränderung des Querschnitts des Querträgers (20) in dem Bereich, in dem er den Längsträger (17) überdeckt, verbunden ist.

23. Scheibenbremse (1) gemäß Anspruch 10 oder einem seiner Unteransprüche, wobei der Querträger (20) einen C-förmigen Querschnitt aufweist und der Längsträger (17) zwei weitere C-förmige Abschnitte (36) bildet, die sich entlang beider Seiten des Querträgers (20) derart erstrecken, dass jeder C-förmige Abschnitt (36) des Längsträgers zusammen mit dem Querträger (20) einen im Wesentlichen S-förmigen Abschnitt bildet.

24. Scheibenbremse (1) gemäß Anspruch 10 oder einem seiner Unteransprüche, wobei der Längsträger (17) der Feder einen Betätigungsabschnitt (38) bildet, der derart angeordnet ist, dass er das freie Ende des zweiten Endes (19) des Längsträgers (17) bildet.

25. Scheibenbremse (1) gemäß Anspruch 10, wobei der Querträger (20) zwischen dem Schnappbefestigungssitz (24) und dem zweiten Ende (19) des Längsträgers (17) angeordnet ist und der Abstand zwischen dem Querträger (20) und dem Schnappbefestigungssitz (24) kürzer als der Abstand zwischen dem Querträger (20) und dem zweiten Ende (19) ist.

## Revendications

1. Ressort (14) pour des plaquettes (5) destiné à être associé avec un étrier (2) pour un frein à disque (1), ledit ressort (14) comprenant :
- une traverse longitudinale (17) ayant deux extrémités (18, 19) appropriées pour mettre en prise des parties antagonistes (15, 11) reliées audit étrier (2) ;
- une traverse transversale (20) reliée à la traverse longitudinale (17) et ayant deux extrémités (21, 22) appropriées pour mettre en prise les plaquettes (5) pour les maintenir élastiquement,
**caractérisé en ce qu'**il comprend une partie définissant un siège (24) pour la fixation par encliquetage de la traverse longitudinale (17) à l'une des parties antagonistes (11).

2. Ressort (14) selon la revendication 1, dans lequel ledit siège de fixation par encliquetage (24) est formé à l'une (18) des extrémités (18, 19) de la traverse longitudinale (17) et est approprié pour mettre en prise par encliquetage un tirant d'assemblage (11) reliant de manière structurale deux parois latérales (3) de l'étrier (2).

3. Ressort (14) selon la revendication 2, dans lequel l'extrémité (19) de la traverse longitudinale (17) en face du siège de fixation par encliquetage (24) forme un siège de butée (37) pour le ressort (14) contre une tige de soutien (15) qui supporte les plaquettes (5).

4. Ressort (14) selon l'une quelconque des revendications précédentes, qui est formé d'un seul tenant dans un matériau en métal de type plaque.

5. Ressort (14) selon la revendication 4, dans lequel le matériau en métal de type plaque est formé de telle manière qu'il possède uniquement des courbures autour d'axes sensiblement parallèles les uns des autres et sensiblement perpendiculaires au plan du disque de frein (39) lorsque le ressort (14) est monté dans l'étrier (2).

6. Ressort (14) selon l'une quelconque des revendications précédentes, dans lequel la traverse transversale (20) est relié à la traverse longitudinale (17) sans aucune variation de la section de la traverse transversale (20) dans la région dans laquelle il chevauche la traverse longitudinale (17).

7. Ressort (14) selon l'une quelconque des revendications précédentes, dans lequel la traverse transversale (20) a une section en forme de C et la traverse longitudinale (17) forme deux autres parties en forme de C (36) s'étendant le long des deux côtés de la traverse transversale (20), de sorte que chaque partie en forme de C (36) de la traverse longitudinale forme, conjointement avec la traverse transversale (20), une partie sensiblement en forme de S.

8. Ressort (14) selon l'une quelconque des revendications précédentes, dans lequel la traverse longitudinale (17) du ressort forme une partie d'actionnement (38) agencée de manière à former l'extrémité libre de la deuxième extrémité (19) de la traverse longitudinale (17).

9. Ressort (14) selon l'une quelconque des revendications précédentes, dans lequel la traverse transversale (20) est agencé entre ledit siège de fixation par encliquetage (24) et la deuxième extrémité (19) de la traverse longitudinale (17) et la distance entre la traverse transversale (20) et le siège de fixation par encliquetage (24) est plus courte que la distance entre la traverse transversale (20) et ladite deuxième extrémité (19).

10. Frein à disque (1) comprenant :
un étrier (2) avec deux parois latérales (3) agencées sur deux côtés d'un plan de disque (39) et formant des sièges pour des plaquettes (8), où les deux parois latérales (3) sont reliées l'une à l'autre au moyen de ponts d'extrémité (9a, 9b) définissant une ouverture intermédiaire (10) ;
un tirant d'assemblage (11) agencé dans ladite ouverture intermédiaire (10) reliant structuralement les deux parois latérales (3) de manière à limiter la déformation de l'étrier (2) pendant le freinage ;
au moins une tige de soutien (15) appropriée pour soutenir des plaquettes (5) ;
une paire de plaquettes (5) agencées dans lesdits sièges pour plaquettes (8) et soutenues par ladite tige de soutien (15) ;
un ressort (14) pour maintenir les plaquettes (5),
où ledit ressort (14) comprend :
une traverse longitudinale (17) ayant une première extrémité (18) formant un siège (24) pour la fixation par encliquetage de la traverse longitudinale (17) audit tirant d'assemblage (11) et une deuxième extrémité (19) appropriée pour mettre en prise ladite tige de soutien (15).
une traverse longitudinale (20) relié à la traverse longitudinale (17) et ayant deux extrémités opposées (21, 22) appropriées pour mettre en prise les plaquettes (5) pour maintenir élastiquement ces dernières.

11. Frein à disque (1) selon la revendication 10, dans lequel ledit tirant d'assemblage (11) et ledit siège de fixation par encliquetage (24) du ressort (14) sont agencés et formés de sorte que, lors de la déformation élastique du ressort (14) nécessaire pour amener sa deuxième extrémité (19) en aboutement serré contre la tige de soutien (15) le ressort (14) reste attaché au tirant d'assemblage (11).

12. Frein à disque (1) selon la revendication 10 ou 11, dans lequel ledit ressort (14) est formé d'une seule pièce dans un matériau en métal de type plaque.

13. Frein à disque (1) selon la revendication 12, dans lequel le matériau en métal de type plaque est formé de manière qu'il présente uniquement des courbures autour d'axes sensiblement parallèles les uns aux autres et sensiblement perpendiculaires au plan du disque de frein lorsque le ressort (14) est monté dans l'étrier (2).

14. Frein à disque (1) selon la revendication 10 ou l'une des revendications dépendantes de celle-ci, dans lequel le tirant d'assemblage (11) est formé d'un seul tenant avec les deux parois latérales (3) de l'étrier (2).

15. Frein à disque (1) selon la revendication 14, dans lequel le tirant d'assemblage (11) et les deux parois latérales (3) sont obtenus à partir d'aluminium ou d'alliage d'aluminium.

16. Frein à disque (1) selon la revendication 10 ou l'une des revendications dépendantes de celle-ci, dans lequel ledit tirant d'assemblage (11) est relié au moyen de moyens filetés avec au moins l'une des deux parois latérales (3) de l'étrier (2).

17. Frein à disque (1) selon la revendication 16, dans lequel ledit tirant d'assemblage (11) est fait d'acier.

18. Frein à disque (1) selon la revendication 10 ou l'une des revendications dépendantes de celle-ci, dans lequel :
le siège de fixation par encliquetage (24) met en prise le côté du tirant d'assemblage (11) faisant face aux plaquettes (5) au moyen de contact serré ;
la deuxième extrémité (19) de la traverse longitudinale (17) met en prise au moyen de contact serré le côté de la tige de support (15) faisant face aux plaquettes (5) ;
les extrémités (21, 22) de la traverse transversale (20) mettent en prise les bords (23) des plaquettes (5) faisant sensiblement face au tirant d'assemblage (11), de sorte que les plaquettes (5) sont écartées élastiquement du tirant d'assemblage (11).

19. Frein à disque (1) selon la revendication 10 ou l'une des revendications dépendantes de celle-ci, dans lequel les plaquettes (5) définissent des sièges (35) appropriés pour loger ladite traverse transversale (20) de sorte qu'un mouvement du ressort (14) par rapport aux plaquettes (5) est empêché ou gêné dans la direction longitudinale de la traverse longitudinale (17).

20. Frein à disque (1) selon la revendication 10 ou l'une des revendications dépendantes de celle-ci, dans lequel le tirant d'assemblage (11) possède une section de forme au moins partiellement polygonale et le siège de fixation par encliquetage (24) du ressort (14) possède une section de forme au moins partiellement polygonale approximativement complémentaire à la forme partiellement polygonale du tirant d'assemblage (11) et ayant une taille légèrement plus petite, de sorte qu'une raccord d'interférence est fourni avec le tirant d'assemblage (11).

21. Frein à disque (1) selon la revendication 10 ou l'une des revendications dépendantes de celle-ci, comprenant deux tiges de support (15) chacune étant agencée à proximité de l'un des ponts d'extrémité (9a, 9b) de l'étrier, respectivement, et où les plaquettes sont fixées par deux tiges de support (15).

22. Frein à disque (1) selon la revendication 10 ou l'une des revendications dépendantes de celle-ci, dans lequel la traverse transversale (20) est relié à la traverse longitudinale (17) sans aucune variation de la section de la traverse transversale (20) dans la région dans laquelle il chevauche la traverse longitudinale (17).

23. Frein à disque (1) selon la revendication 10 ou l'une des revendications dépendantes de celle-ci, dans lequel la traverse transversale (20) a une section en forme de C et la traverse longitudinale (17) forme deux autres parties en forme de C (36) s'étendant le long des deux côtés de la traverse transversale (20), de sorte que chaque partie en forme de C (36) de la traverse longitudinale forme, conjointement avec la traverse transversale (20), une partie sensiblement en forme de S.

24. Frein à disque (1) selon la revendication 10 ou l'une des revendications dépendantes de celle-ci, dans lequel la traverse longitudinale (17) du ressort forme une partie d'actionnement (38) agencée de manière à former l'extrémité libre de la deuxième extrémité (19) de la traverse longitudinale (17).

25. Frein à disque (1) selon la revendication 10, dans lequel la traverse transversale (20) est agencé entre ledit siège de fixation par encliquetage (24) et la deuxième extrémité (19) de la traverse longitudinale (17) et la distance entre la traverse transversale (20) et le siège de fixation par encliquetage (24) est plus courte que la distance entre la traverse transversale (20) et ladite deuxième extrémité (19).
